(19) Europäisches Patentamt / European Patent Office / Office européen des brevets

(11) **EP 2 851 342 B1**

(12) **EUROPEAN PATENT SPECIFICATION**

(45) Date of publication and mention
of the grant of the patent:
**02.11.2016 Bulletin 2016/44**

(51) Int Cl.:
**C01B 31/04** (2006.01)     **B82Y 30/00** (2011.01)

(21) Application number: **14186626.9**

(22) Date of filing: **18.01.2011**

(54) **GRAPHENE POLYMER COMPOSITE**

GRAPHEN-POLYMER-VERBUNDSTOFF

COMPOSITE POLYMÈRE DE GRAPHÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2010 GB 201000743**

(43) Date of publication of application:
**25.03.2015 Bulletin 2015/13**

(62) Document number(s) of the earlier application(s) in
accordance with Art. 76 EPC:
**11702497.6 / 2 526 050**

(73) Proprietor: **The University of Manchester
Manchester M13 9PL (GB)**

(72) Inventors:
• **Kinloch, Ian Anthony
  Manchester, M13 9PL (GB)**
• **Young, Robert Joseph
  Manchester, M13 9PL (GB)**
• **Novoselov, Konstantin Sergeevich
  Manchester, M13 9PL (GB)**

(74) Representative: **HGF Limited
1 City Walk
Leeds LS11 9DX (GB)**

(56) References cited:
**WO-A1-2009/152146     WO-A2-2008/048705
WO-A2-2009/123771     US-A1- 2007 284 557**

• **STANKOVICH S ET AL: "Graphene-based composite materials", NATURE, NATURE PUBLISHING GROUP, LONDON, GB, vol. 442, 20 July 2006 (2006-07-20), pages 282-286, XP002481410, ISSN: 0028-0836, DOI: DOI:10.1038/NATURE04969**

## Description

The present invention relates to novel nanocomposite materials, methods of making nanocomposites and uses of nanocomposite materials.

Graphene is one of the stiffest known materials, with a Young's modulus of 1 TPa, making it an ideal candidate for use as a reinforcement in high-performance composites. We have found that novel materials having a range of advantageous properties can be derived from graphene and graphene analogues. We have also demonstrated unambiguously that stress transfer takes place from the polymer matrix to monolayer graphene, showing that the graphene acts as a reinforcing phase. We have also modeled the behavior using shear-lag theory, showing that graphene monolayer nanocomposites can be analyzed using continuum mechanics. Additionally, we have been able to monitor stress transfer efficiency and breakdown of the graphene/polymer interface.

Since graphene was first isolated in 2004 [1,2] the majority of the research effort has concentrated upon its electronic properties aimed at applications such as in electronic devices. [3,4] A recent study has investigated the elastic mechanical properties of monolayers of graphene using nanoindentation by atomic force microscopy. [5] It was shown that the material has a Young's modulus of the order of 1 TPa and an intrinsic strength of around 130 GPa, making it the strongest material ever measured.

Carbon nanotubes are under active investigation as reinforcements in nanocomposites [6,7] and it is well established that platelet reinforcements such as exfoliated nanoclays [8,9] can be employed as additives to enhance the mechanical and other properties of polymers. Recently it has been demonstrated that polymer-based nanocomposites with chemically-treated graphene oxide as a reinforcement may show dramatic improvements in both electronic [10] and mechanical [11] properties (thus a 30 K increase in the glass transition temperature is achieved for only a 1 % loading by weight of the chemically-treated graphene oxide in a poly(methyl methacrylate) matrix). However, issues that arise in these prior art nanocomposites systems include the difficulty of dispersion of the reinforcing phases and stress transfer at the interface between the dispersed phase and the polymer matrix. To date it has not been possible to produce polymer composites without chemical modification of the graphene. We believe that this may be due to the expected difficulty on account of incompatibility of the materials.

It is now well established that Raman spectroscopy can be used to follow stress transfer in a variety of composites reinforced with carbon-based materials such as carbon fibres [12,13] and single- and double-walled carbon nanotubes. [14-16] Such reinforcements have well-defined Raman spectra and their Raman bands are found to shift with stress which enables stress-transfer to be monitored between the matrix and reinforcing phase. Moreover, a universal calibration has been established between the rate of shift of the G' carbon Raman bands with strain [14] that allows the effective Young's modulus of the carbon reinforcement to be estimated. Recent studies have shown that since the Raman scattering from these carbon-based materials is resonantly enhanced then strong well-defined spectra can be obtained from very small amounts of the carbon materials, for example individual carbon nanotubes either isolated on a substrate [17] or debundled and isolated within polymer nanofibers. [18,19]

Raman spectroscopy has also been employed to characterise the structure and deformation of graphene. It has been demonstrated that the technique can be used to determine the number of layers in graphene films [20]. Graphene monolayers have characteristic spectra in which the G' band (also termed the 2D band) can be fitted with a single peak, whereas the G' band in bilayers is made up of 4 peaks [20], which is a consequence of the difference between the electronic structure of the two type of samples. Several recent papers have established that the Raman bands of monolayer graphene shift during deformation. [22-25] The graphene has been deformed in tension by either stretching [22,23] or compressing [24] it on a PDMS substrate [22] or a PMMA beam. [23,24] It is also found that the G band both shifts to lower wavenumber in tension and undergoes splitting. The G' band undergoes a shift in excess of -50 cm$^{-1}$/% strain which is consistent with it having a Young's modulus of over 1 TPa [14]. A recent study [25] of graphene subjected to hydrostatic pressure has shown that the Raman bands shift to higher wavenumber for this mode of deformation and that the behavior can be predicted from knowledge of the band shifts in uniaxial tension.

In this present application we have prepared and tested graphene-based composites. We have used Raman spectroscopy to monitor stress transfer in a model composite consisting of a thin polymer matrix layer and a mechanically-cleaved single graphene monolayer using the stress-sensitivity of the graphene G' band. This allows us to verify the beneficial properties of our composites.

Summary of Invention

According to a first aspect of the present invention, there is provided a structural material comprising a nanocomposite material, the nanocomposite material comprising:

a substrate; and
a graphene component distributed in the substrate;

wherein the graphene component is graphene or functionalised graphene and is in the form of flakes at least 10 $\mu$m in length.

According to a second aspect of the invention, there is provided the use of a graphene component according to the first aspect of the invention for the production of a structural material.

In the disclosureIn an embodiment, the nanocomposite material is in the form of a substrate in which the graphene or functionalised graphene is distributed. For example, the graphene or functionalised graphene may be added to a polymer mix prior to extrusion to form the substrate.

In an embodiment, the substrate of the nanocomposite material may itself be adhered to another structural material. The term "structural material" includes building materials (e.g. steels or concrete lintels) and also parts of existing structures such as bridges, buildings, aircrafts or other large structures.

The adhesive component can include contact adhesives (e.g. adhesives that work upon pressure) as well as reactive adhesives. The adhesive component may therefore be selected from the group comprising: polyvinyl acetate (PVA) and an epoxy resin. Other adhesives include poly(alcohol), acrylics, poly(urethane), poly(imides), rubber, latex, poly(styrene) cement, cyanoacrylate, ethylene-vinyl acetate, poly(vinyl acetate), silicones, acrylonitrile and acrylic.

The graphene component of the nanocomposite may be present as a one-atom thick layer on the substrate or in certain cases several graphene layers may be built up. In the latter case, the graphene layer may be present as a layer in which the thickness is more than one atom e.g. from 2 to 10 atoms, 2 to 50 atoms or even 2 to 100 atoms, e.g. the graphene layer may be present as a layer having a thickness of 2, 3, 4, 5, 6, 7, 8, 9 or 10 atoms. More usually, graphene is present as a monolayer i.e. a one-atom thick layer. Alternatively, the graphene is present as a bilayer or a trilayer, i.e. a two-atom or three atom thick layer. Typically, the graphene needs to be at least 10 $\mu$m in length and preferably greater than 30 $\mu$m and most preferably greater than 50 $\mu$m, to provide beneficial structural effects. However, provided there is a good interface between the graphene and the substrate, it is possible that the graphene can be less than 10 $\mu$m in length (e.g. 1, 2, 3, 4, 5, 6, 7, 8 or 9 $\mu$m in length).

The nanocomposite material may have more than two layers. Thus the invention also relates to sandwich structures, such as a sandwich of graphene-polymer-graphene or polymer-graphene-polymer, and to more complex multilayer structures with repeating layers of graphene and polymer substrate. Thus a sandwich structure having three layers or a multilayer structure of four, five, six or seven layers, eg up to ten layers, may have advantageous properties. A sandwich of graphene polymer graphene will have utility in fabricating devices such as printed circuit boards because it is not subject to significant thermal expansion and stress. Sandwich structures may be particularly advantageous in strain sensing applications e.g. in order to improve the interface between the graphene and the underlying polymer. In particular cases the provision of an additional polymer coating may be essential in order to provide a working strain sensor, although it is not always essential as is shown in example 6 below. In such cases, the sandwich structure may alternatively be regarded as a composite material comprising a substrate, a graphene (or functionalised graphene) layer and a protective layer.

Further layers of other materials may also be included in the composite or sandwich/multilayer structure as needed. For example, an outer protective coating may be applied to the composite as is present in the composites of example 6.

The substrate surface to which the graphene is applied is usually substantially flat. However, the methods of the present invention are applicable to irregular surfaces e.g. surfaces containing peaks, troughs and/or corrugations. Alternatively, the substrate surface to which the graphene is applied is rounded. Surface variations from flatness may be from 0.1 to 5 nm.

In an embodiment, the nanocomposite material comprises graphene or functionalized graphene embedded within the substrate. Typically, in this embodiment, the nanocomposite material need not comprise an adhesive component.

The underlying substrate may be any polymeric material. However, ideally to ensure good adhesion and retention of the graphene it is important for the polarity of the polymer to be compatible with the graphene. Suitable polymer substrates include polyolefins, such as polyethylenes and polypropylenes, polyacrylates, polymethacrylates, polyacrylonitriles, polyamides, polyvinylacetates, polyethyleneoxides, polyethylene, terphthalates, polyesters, polyurethanes and polyvinylchlorides. Preferred polymer substrates are epoxies, polyacrylates and polymethacrylates.

In an embodiment, the underlying substrate thickness may be from 1 $\mu$m to 10 mm, 10 $\mu$m to 10 mm and will typically be in the range of 50 - 200$\mu$m.

In an embodiment, the nanocomposite material comprises graphene that has not been previously chemically modified (i.e. pristine graphene). In an alternate embodiment, the nanocomposite material comprises functionalised graphene (i.e. graphene that has been previously chemically modified, e.g. graphene oxide). Graphene may be functionalized in the same way in which carbon nanotubes are functionalized and the skilled person will be familiar with the various synthetic procedures for manufacturing functionalized carbon nanotubes and could readily apply these techniques to the manufacture of functionalized graphene.

Chemical functionalisation of the graphene may assist in the manufacturing of the graphene polymer composite (e.g. by aiding dispersion of the graphene in an adhesive component or in the substrate component). Chemical functionalisation of the graphene may also improve the interface between the graphene and the adhesive material, which can lead to an increase in the Raman peak shift per unit strain (which in turn leads to a more accurate strain sensor). In this regard, it is possible to tune the interface between the graphene component and the adhesive component by selecting an appropriately functionalized (or partially functionalized) graphene component for a particular adhesive component. However, pristine graphene itself has a stronger Ramen signal as compared with functionalised graphene (which in turn leads to a more accurate strain sensor). Thus, when the nanocomposite is to be used as a strain sensor, it is desirable to balance the strength of the Raman signal of the graphene component itself with the possibility of improved interface between the graphene and the other nanocomposite components (and therefore increased Raman peak shift per unit strain). Thus, as shown in examples 1 and 2, even very highly functionalised graphene (for example graphene oxide), which has a lower Raman signal than pristine graphene, can be used as a component in a strain sensor when the adhesive component is judiciously selected.

The disclosure provides a method of preparing a graphene polymer composite, the method comprising the steps of:

(a) mechanically cleaving graphite,
(b) providing a layer or layers of graphene; and either
(c) providing a substrate of polymeric material, and depositing the one or more layers of graphene obtained from the graphite onto the polymeric substrate, wherein the graphene is not chemically treated prior to deposition on the polymer substrate; or
(d) admixing the cleaved graphene with a liquid formulation to produce a dispersion of graphene.

The graphene may be provided by mechanical cleaving of graphite, or any other way to obtain graphene. Thus, for instance it may be obtained by cleaving graphene from SiC substrates, chemical exfoliation of graphene, or using epitaxial graphene.

The resulting graphene polymer composite may be treated chemically to functionalise the composite material.

In an embodiment, the substrate thickness may be from 1 $\mu$m to 10 mm, 10 $\mu$m to 10 mm and typically be in the range 50 - 200$\mu$m. In an embodiment, the substrate thickness is in the range 0.1 mm to 5 mm.

According to the disclosure, there is provided a method of determining one of more physical properties of a graphene or functionalized graphene monolayer in a nanocomposite, the method comprising the steps of:

(a) providing a graphene or functionalized graphene nanocomposite,
(b) subjecting the nanocomposite to Raman spectroscopy, and
(c) analysing the data recorded.

Of course, the method of determining one or more physical properties of a graphene or functionalized graphene nanocomposite is equally applicable to any high modulus two layer system that is able to produce a strong Raman signal. For example, the method would be applicable to boron nitride. Other examples of layers that are able to produce a strong Raman signal inlcude: Tungsten disulphide (WS$_2$), carbon nitride (CN) and nitrogen/boron/fluorine doped graphene, including fluorographene.

The physical properties may be a property such as, for example, deformation or strain. The method can therefore be applied to the measurement of strain of bridges and other structures over a period of time.

Another aspect of the disclosure involves the remote monitoring of the state of a nanocomposite of the present invention (such as strain) by Raman measurements on graphene or functionalised graphene inclusions within the nanocomposite.

The disclosure also provides a method of determining the residual strain imparted to a plastics product during its manufacture, the method comprising:

(a) adding graphene or functionalised graphene to the plastics material to form a nanocomposite of the present invention;
(b) subjecting the plastics material to one or more manufacturing steps;
(c) subjecting the plastics material to Raman spectroscopy; and
(d) analysing the data recorded.

The above method is useful as a quality control check during the manufacturing process of the plastics product. The manufactured plastics product is a nanocomposite graphene-containing or functionalised-graphene-containing material according to the present invention. Many plastics products are subject to rigorous safety regulations and the above process can be used to determine other important properties such as the fracture properties of a plastics material. The method is particularly suitable for structural plastics products that are required to have significant strength in order to perform their purpose. Additionally, the method is useful for the optimisation of complicated injection processes where it is vital to control and minimise residual strains.

In an embodiment, the plastics product is selected from the group comprising: a water pipe and a gas pipe. In another embodiment, the plastics product is a structural composite or a coating. In an embodiment, the plastics product includes automotive panels, aerospace composites, defence applications (e.g. armour) and civil structures (e.g. bridges components and paints).

In an embodiment, the amount of graphene or functionalized graphene added to the plastics material is from 0.001 to 30 wt %, preferably 0.1 to 10 wt %, and more preferably 0.1 to 1 wt %.

In an embodiment, the plastics material is a material selected from the group consisting of: poly(ethylene), poly(styrene), poly(propylene), poly(amide), PTFE, para-aramid, poly(vinyl chloride), poly(ethyl acetate), poly(vinyl alcohol), poly(vinyl acetate), epoxy, viton, polyphenylenebenzobisoxazole (PBO), vectran. In another embodiment, the plastics material is a material selected from the group consisting of: polyaryletherketones, polyphenylenesulphides, liquid crystalline polyesters, polyamide imides, polyarylates, polyarylsulphones, polybutylene, polybutyleneterephthalates, polyethyleneterephthalate, polycarbonate, polychlorotrifluoroethylene, polyvinyldifluoride, polyperfluoroalkoxy, polydimethylsiloxanes, thermoplastic polyesters, thermosetting polyesters, unsaturated polyesters, polyetherimides, polyethersulphones, thermosetting and thermoplastic polyimides, polyoxymethylene, polyphenylene oxide, polyurethanes, polyvinylidene chloride, acrylic resins, vinylacetate resins, perfluorinatedpolyethylenepropylene, polyphenylenes, polybenzimidazole, fluoropolymers, thermoplastic continuous and discontinuous fibre composites, thermosetting continuous and discontinuous fibre composites, fluorinated elastomers, rubbers, styrene butadiene rubbers, bismaleimides, and polyacrylonitrilebutadienestyrene. In an embodiment, the plastics material is a blends, alloy or copolymer of the above materials.

In the disclosure one or more manufacturing steps are selected from the group consisting of: injection moulding, hot pressing, drawing, extrusion, autoclaving, annealing, heat treating, sintering, compression moulding, machining, welding, adhesively bonding, thermoforming, vacuum forming, blow moulding, stretch blow moulding, transfer moulding, calendaring, compounding, orienting, tape laying with in situ consolidation, diaphragm forming, rotational moulding, centrifugal moulding, foam blowing and pultruding.

The disclosure provides a method of improving the mechanical properties of a nanocomposite product of the present invention containing graphene or functionalized graphene, the method comprising strain hardening the nanocomposite product.

In the disclosure, the improving the mechanical properties of the nanocomposite product includes increasing the modulus. In an embodiment, the improving the mechanical properties of a nanocomposite product includes increasing strength. In an embodiment, the improving the mechanical properties of a nanocomposite product includes increasing toughness.

In the disclosure, the improving the mechanical properties of a nanocomposite product includes increasing the modulus and the modulus is increased by 10% or more, preferably the modulus is increased by 100% or more, more preferably the modulus is increased by 200% or more and further preferably the modulus is increased by 300% or more.

In the disclosure, the strain hardening of the nanocomposite product involves one or more cycles of imparting strain to the plastics product. Preferably the strain hardening of the nanocomposite product involves from 1 to 10 cycles, preferably 2 to 5 cycles of imparting and releasing strain to the nanocomposite product.

In the disclosure, the nanocomposite product is a structural composite or a coating. In an embodiment, the nanocomposite product includes automotive panels, aerospace composites, defence applications (e.g. armour) and civil structures (e.g. bridges components and paints).

In an embodiment, the nanocomposite product includes from 0.001 to 30 wt %, preferably 0.1 to 10 wt %, and more preferably 0.1 to 1 wt % graphene or functionalized graphene.

In an embodiment, the plastics material of the nanocomposite product is a material selected from the group consisting of: poly(ethylene), poly(styrene), poly(propylene), poly(amide), PTFE, para-aramid, poly(vinyl chloride), poly(ethyl acetate), poly(vinyl alcohol), poly(vinyl acetate), epoxy, viton, PBO, vectran.

Our analysis to determine the properties of the graphene polymer composite is described herein.

This methodology may also be applicable to other composites such as functionalized graphene composites as shown in the graphene oxide composites of examples 1 and 2.

The resulting measurements allow us to determine the potential usefulness of the graphene polymer composite as a structural element. In other words, it is possible to determine from our measurements which polymer composites will have the appropriate physical and/or electrical properties for the intended end use.

According to a an aspect of the present invention, there is provided the use of a graphene or functionalized graphene nanocomposite for the production of an electronic device and/or a structural material. The electronic device may be a sensor, an electrode, a field emitter device or a hydrogen storage device. A structural material is a reinforced material that is strengthened on account of the inclusion of graphene or functionalized graphene.

The combination of electronic and mechanical properties of the graphene polymer composites of the invention renders them suitable for a wide range of uses including: their potential use in future electronics and materials applications, field emitter devices, sensors (e.g. strain sensors), electrodes, high strength composites, and storage structures of hydrogen, lithium and other metals for example, fuel cells, optical devices and transducers. Where the composite structures exhibit semiconductive electrical properties, it is of interest to isolate bulk amounts thereof for semiconductor uses.

The particular graphene area and thickness on the substrate, as well as the topology affects the physical and electronic properties of the composite. For example, the strength, stiffness, density, crystallinity, thermal conductivity, electrical conductivity, absorption, magnetic properties, response to doping, utility as semiconductors, optical properties such as absorption and luminescence, utility as emitters and detectors, energy transfer, heat conduction, reaction to changes in pH, buffering capacity, sensitivity to a range of chemicals, contraction and expansion by electrical charge or chemical interaction, nanoporous filtration membranes and many more properties are affected by the above factors.

When subsequently modified with suitable chemical groups, the composites are chemically compatible with a polymer matrix, allowing transfer of the properties of the nanotubes (such as mechanical strength) to the properties of the composite material as a whole. To achieve this, the modified composites can be thoroughly mixed (physically blended) with the polymeric material, and/or, if desired, allowed to react at ambient or elevated temperature. These methods can be utilized to append functionalities to the composites that will further covalently bond to the host polymer substrate.

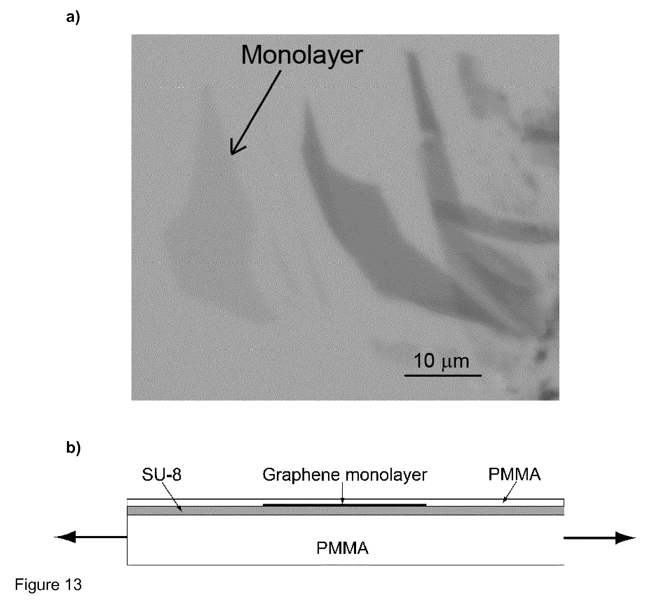

An optical micrograph of a specimen is shown in Figure 13a where the approximately diamond-shaped 12 μm × 30 μm graphene monolayer is indicated and Figure 13b shows a schematic diagram of the specimen.

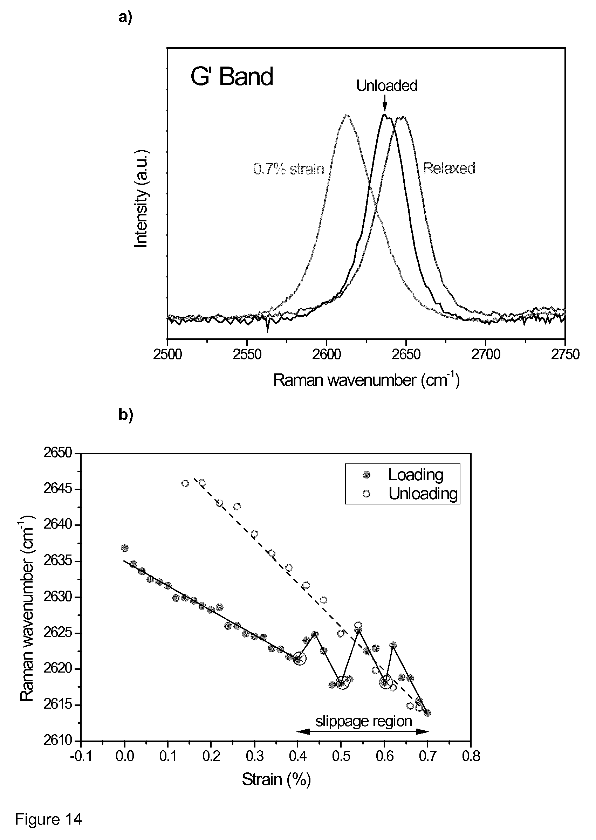

Raman spectra were obtained initially from the middle of the monolayer and Figure 14a shows the position of the G' band before deformation, at 0.7 % strain and then unloaded. It can be seen from Figure 14b that there is a large stress-induced shift of the G' band. There was a linear shift of the band up to 0.4 % strain when the stepwise deformation was halted to map the strain across the monolayer. It was then loaded up to 0.5 % and 0.6 % strain when further mapping was undertaken and finally the specimen was unloaded from 0.7 % strain. It can be seen that there was some relaxation in the specimen following each of the mapping stages so that the band shifts became irregular. In addition, the slope of the unloading line from the highest strain level is significantly higher than that of the loading line. The slope of the unloading line is ∼ -60 cm$^{-1}$/% strain, similar to the behavior found for the deformation of a free-standing monolayer on a substrate[22,23]. Moreover, the G' band position after unloading is at a higher wavenumber than before loading. This behavior is consistent with the graphene undergoing slippage in the composite during the initial tensile deformation and then becoming subjected to in-plane compression on unloading.

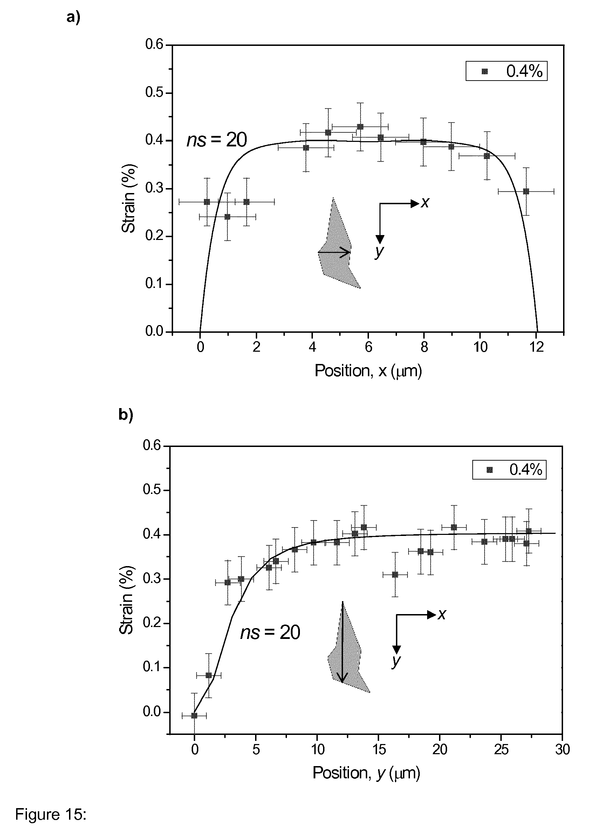

Mapping the local strain in along a carbon fiber in a polymer matrix allows the level of adhesion between the fiber and matrix to be evaluated. [12,13] In a similar way mapping the strain across the graphene monolayer enables stress transfer from the polymer to the graphene to be followed. Figure 15 shows the local strain in the graphene monolayer determined from the stress-induced Raman band shifts at 0.4 % matrix strain. The laser beam in the spectrometer was focused to a spot around 2 μm which allows a spatial resolution of the order of 1 μm on the monolayer by taking overlapping measurements. Figure 15a shows the variation of axial strain across the monolayer in the direction parallel to the strain axis. It can be seen that the strain builds up from the edges and is constant across the middle of the monolayer where the strain in the monolayer equals the applied matrix strain (0.4 %). This is completely analogous to the situation of a single discontinuous fiber in a model composite when there is good bonding between the fiber and matrix. [12,13] This behavior has been analyzed using the well-established shear-lag theory [27-29] where it is assumed that there is elastic stress transfer from the matrix to the fiber through a shear stress at the fiber-matrix interface. It is relatively easy to modify the analysis for platelet rather than fiber reinforcement. It is predicted from shear-lag analysis for the platelet that for a given level of matrix strain, em, the variation of strain in the graphene flake, ef, with position, x, across the monolayer will be of the form

$$e_{\mathrm{f}} = e_{\mathrm{m}} \left[ 1 - \frac{\cosh\left(ns\dfrac{x}{l}\right)}{\cosh(ns/2)} \right] \qquad (1)$$

where

$$n = \sqrt{\frac{2G_{\mathrm{m}}}{E_{\mathrm{f}}}\left(\frac{t}{T}\right)} \qquad (2)$$

and $G_m$ is the matrix shear modulus, $E_f$ is the Young's modulus of the graphene flake, $l$ is the length of the graphene flake in the $x$ direction, $t$ is the thickness of the graphene, $T$ is the total resin thickness and $s$ is the aspect ratio of the graphene ($l/t$) in the $x$ direction. The parameter $n$ is accepted widely as an effective measure of the interfacial stress transfer efficiency, so $ns$ depends on both the morphology of the graphene flake and the degree of interaction it has with the matrix. The curve in Figure 15a is a fit of Equation (1) to the experimental data using the parameter ns as the fitting variable. A reasonable fit was found for $ns \sim 20$ at em = 0.4 % showing that the interface between the polymer and graphene remained intact at this level of strain and that the behavior could be modeled using the shear-lag approach.

The variation of shear stress, $\tau_i$, at the polymer-graphene interface is given by

$$\tau_i = nE_f e_m \frac{\sinh\left(ns\,\frac{x}{l}\right)}{\cosh(ns/2)} \qquad (3)$$

and the maximum value of $\tau_i$, at the edges of the sheet for $ns = 20$ is found to be -2.3 MPa.

Equation (1) shows that the distribution of strain in the graphene monolayer in the x direction in the elastic case depends upon length of the monolayer, $l$. It can be seen from Figure 13a that the flake tapers to a point in the $y$ direction and so the axial strain in the middle of the monolayer was mapped along the y direction as shown in Figure 15b. It can be seen that the strain is fairly constant along most of the monolayer but falls to zero at the tip of the flake, y = 0. The line in Figure 15b is the calculated distribution of axial graphene strain in the middle of the monolayer at em = 0.4 % determined using Equation (1) with $ns = 20$, taking into account the changing width by varying $l$ (and hence $s$). It can be seen that there is excellent agreement between the measured and predicted variation of fiber strain with position on the monolayer, validating the use of the shear lag analysis.

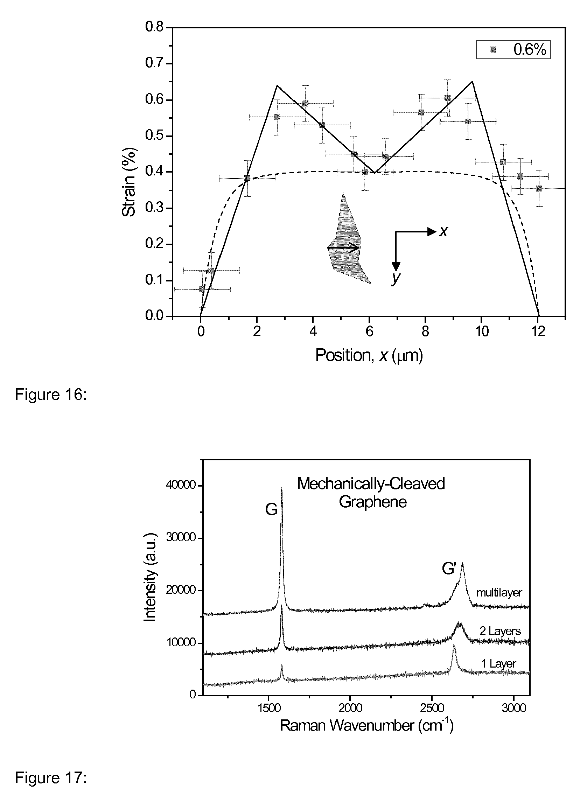

When the matrix strain was increased to em = 0.6 % a different distribution of axial strain in the graphene monolayer was obtained as shown in Figure 16. In this case there appears to be an approximately linear variation of the graphene strain from the edges to the centre of the monolayer up to 0.6 % strain (= em) and a dip in the middle down to around 0.4 % strain. In this case it appears that the interface between the graphene and polymer has failed and stress transfer is taking place through interfacial friction. [29] The strain in the graphene does not fall to zero in the middle of the flake, however, showing that the flake remains intact unlike the behavior of carbon fibers undergoing fracture in the fragmentation test. [12,13] The interfacial shear stress, $\tau_i$, in this case can be determined from the slope of the lines in Figure 16 using the force balance equation

$$\frac{de_f}{dx} = -\frac{\tau_i}{E_f t} \qquad (4)$$

which gives an interfacial shear stress in the range 0.3-0.8 MPa for the lines of different slope.

There are important implications from this study for the use of graphene as a reinforcement in nanocomposites. The quality of fiber reinforcement is often described in terms of the 'critical length', $l_c$ - the parameter is small for strong interfaces and is defined as 2x the distance over which the strain rises from the fiber ends to the plateau level. [29] It can be seen from Figure 15a that the strain rises to about 90 % of the plateau value over about 1.5 $\mu$m from the edge of the flake making the critical length of the graphene reinforcement of the order of 3 $\mu$m. It is generally thought that in order to obtain good fiber reinforcement the fiber length should be $\sim 10 l_c$. Hence, relatively large graphene flakes (>30 $\mu$m) will be needed before efficient reinforcement can take place. One process for efficiently exfoliating graphene to single layers reported recently produced monolayers of no larger than a few microns across[30,31]. The relatively poor level of adhesion between the graphene and polymer matrix is also reflected in the low level of interfacial shear stress, $\tau_i$, determined - carbon fibers composites have values of $\tau_i$ an order of magnitude higher ($\sim$ 20-40 MPa). [12,13] However, in the graphene composite interfacial stress transfer will only be taking place though van der Waals bonding across an atomically smooth surface. The efficiency of reinforcement is also reflected in the value of the parameter ns (= 20) in the shear lag analysis used to fit the experimental data. Since the graphene is so thin, the aspect ratio s will be large (12 $\mu$m/0.35 nm = $3.5 \times 10^4$) making n small ($6 \times 10^{-4}$). This value of $n$ is a factor of 4 smaller than that determined by putting the values of $G_m \sim 1$ GPa, $E_f \sim 1$ TPa and $t/T$ ($\sim$ 0.35 nm/100 nm) into Equation (2) ($n \sim 2.6 \times 10^{-3}$), showing a possible limitation of the shear-lag analysis. [28] Nevertheless, the parameter n determined experimentally can be employed to monitor the efficiency of stress transfer across the graphene-polymer interface, which in this case appears to be less than ideal.

This present application has important implications for the use of graphene as a reinforcement in composites. As well as demonstrating for the first time that it is possible to map the deformation of graphene monolayer in a polymer composite using Raman spectroscopy, a number of other issues also arise. Firstly, we have found that a spectrum can be obtained from a reinforcement only one atom thick, allowing the mechanics of nano-reinforcement to be probed directly. Secondly, we have found that the continuum mechanics approach is also valid at the atomic level - a question widely asked in the field of nanocomposites - and that the composite micromechanics developed for the case of fibre reinforcement is also valid at the atomic level for graphene monolayers. We expect that our technique will be used widely in the evaluation of graphene composites. This present application has concentrated upon pristine, untreated graphene. Chemical modification [10] of the surface or edges may significantly strengthen the interface between the graphene and a polymer, reducing the critical length and increasing n. Our technique should allow the effect of chemical modification to be evaluated. Moreover, if graphene is to be used in devices in electronic circuits, it will have to be encapsulated within a polymer. The technique will also allow the effect of encapsulation upon residual stresses in the material to be probed.

FIGURES

Figure 1: The change in the band position of the G and D band in the GO-PVA films of example 1 as a function of exposure to the laser.

Figure 2: The variation of the band position of the G and D band in the GO-PVA films of example 1 as a function of location on the film.

Figure 3: Change in the G band of the GO-PVA films of example 1 as a function of strain. (Strain measured by the reference resistive gauge.)

Figure 4: Change in the D band of the GO-PVA films of example 1 as a function of strain. (Strain measured by the reference resistive gauge.)

Figure 5: The position of the G-band position as a function of strain as measured by the reference resistive strain gauge (for the strain sensitive coating of example 2).

Figure 6: The position of the G-band position as a function of strain as measured by the reference resistive strain gauge (for the strain sensitive coating of example 2).

Figure 7: The position of the G' band of the graphene of example 3 as function of strain and time.

Figure 8: A photograph of the coated PMMA beams used in example 4. Note the mounted strain gauge on the film.

Figure 9: The deformation cycle applied to the PMMA beam of example 4.

Figure 10: The peak position of the G' band as it follows the strain shown in Figure 9 of example 4.

Figure 11: Contour maps of strain over the graphene flake of example 6 at different strains in the uncoated uncoated states.

Figure 12: Variation of the strain in the graphene of example 6 along the monolayer at a strain of 0.4% for both uncoated and coated with an SU-8 film.

Figure 13: Single monolayer graphene composite.of example 7; a) Optical micrograph showing the monolayer graphene flake investigated; b) Schematic diagram (not to scale) of a section through the composite.

Figure 14: Shifts of the Raman G' band during loading and unloading of the monolayer graphene composite.of example 7; a) Change in the position of the G' band with deformation; b) Shift of the G' band peak position as a function of strain. (The blue circles indicate where the loading was halted to map the strain across the flake).

Figure 15: Distribution of strain in the graphene composite of example 7 in the direction of the tensile axis (x) across a single monolayer at 0.4% strain; a) Variation of axial strain with position across the monolayer in the x-direction (The curve fitted to the data is Equation (1)); b) Variation of axial strain with position across the monolayer in the vertical direction (The curve is calculated from Equation (1) using the value of ns = 20 determined from a) and taking into account the change in width of the graphene sheet with position, y).

Figure 16: Distribution of graphene strain of the composite of example 7 in the direction of the tensile axis (x) across a single monolayer at 0.6% strain; variation of axial strain with position across the monolayer mapped in the x-direction. The solid lines are fitted to the data to guide the eye.

Figure 17: Raman spectra for different layer flakes of graphene

Figure 18: Deformation patterns for a discontinuous flake in a polymer matrix.

Figure 19: Balance of stresses acting on an element of length, dx, of the flake of thickness, *t*, in the composite.

Figure 20: Model of a flake within a resin used in shear-lag theory. The shear stress, $\tau$, acts at a distance z from the flake centre.

Figure 21: a. Distribution of strain in the graphene in direction of the tensile axis across a single monolayer at 0.4% strain. The curves are fits of Equ. SI.12 using different values of parameter *ns*. **b.** Variation of interfacial shear stress with position determined from Equ. SI.13 for the values of *ns* used in **a.**

Figure 22: Distribution of strain in the graphene in direction of the tensile axis across a single monolayer at 0.4% strain showing the variation of fibre strain with position across the monolayer in the vertical direction. The curves were calculated from Equ SI.12 using different values of *ns.*

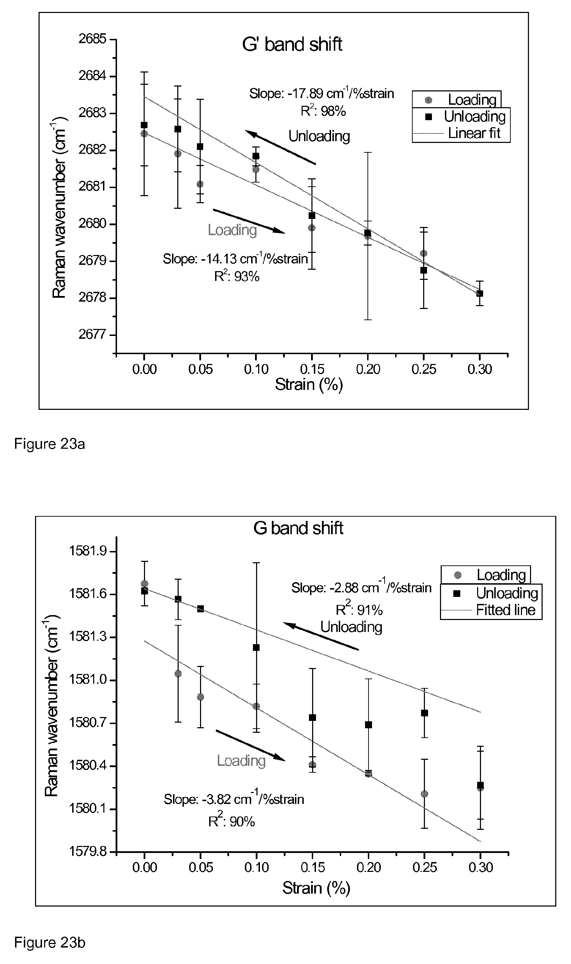

Figure 23: (a) G' band shift for a nanocomposite according to example 11 after being subjected to a load; (b) G band shift for a nanocomposite according to example 11 after being subjected to a load.

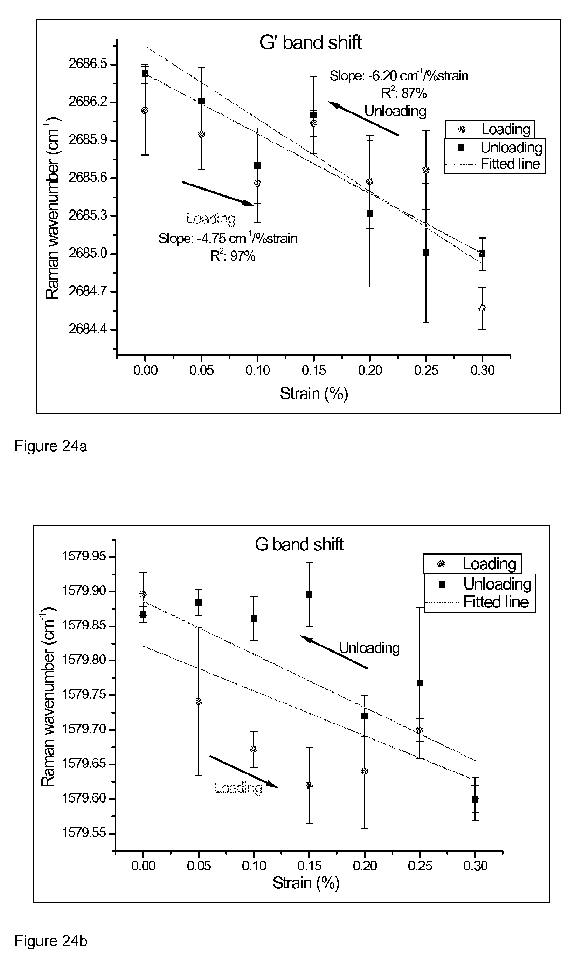

Figure 24: (a) G' band shift for a nanocomposite according to example 12 after being subjected to a load; (b) G band shift for a nanocomposite according to example 12 after being subjected to a load.

## EXAMPLES

**Example 1: Strain sensitive coating comprising graphene oxide (GO)-polyvinyl alcohol (PVA) which was deposited onto a polymethyl methacrylate (PMMA) beam specimen.**

This example serves to illustrate that graphene oxide (a highly substituted and widely commercially available graphene material) can be used as a strain sensitive coating despite having a modulus of 20% of the modulus of pristine graphene (and therefore a smaller Raman peak shift as compared with pristine graphene).

A graphene oxide (GO)- polyvinyl alcohol (PVA) coating was deposited on a PMMA beam following the method of Xin Zhao et al. (Macromolecules, 2010, 43, 9411-9416) and as described in detail in the following paragraphs.

10 ml of 1 wt% PVA solution was prepared and a separate beaker of 10 ml of ∼ 0.1 mg/ml GO solution was also prepared. (The GO solution was made using a method as described in (i) Eda, G.; Fanchini, G.; Chhowalla, M., Large-Area Ultrathin Films of Reduced Graphene Oxide as a Transparent and Flexible Electronic Material. Nat Nano 2008, 3, 270-274; or (ii) Hummers, W. S.; Offeman, R. E., Preparation of Graphitic Oxide. JACS 1958, 80, 1339-1339.) The beam was then coated using the following procedure:

(i) the PMMA beam was placed in the PVA solution for 10 minutes;
(ii) the beam was dried in air;
(iii) the beam then washed by placing it in deionised water for 2 minutes;
(iv) the beam was dried in air;
(v) the beam was placed into the GO solution for 10 minutes;
(vi) the beam then washed by placing it in deionised water for 2 minutes;
(vii) the beam was dried in air.

These steps were repeated 20 times so that the coating on the PMMA beam comprised of 20 alternating GO-PVA layers in a laminate-form. It is thought that each polymer layer will partially infiltrate the underlying layer. The number of layers is not important; in this case 20 layers are being used to build up thickness of GO on the substrate (although it is likely that these steps only need to be repeated two or three times). A reference resistive strain gauge was then mounted onto the coating.

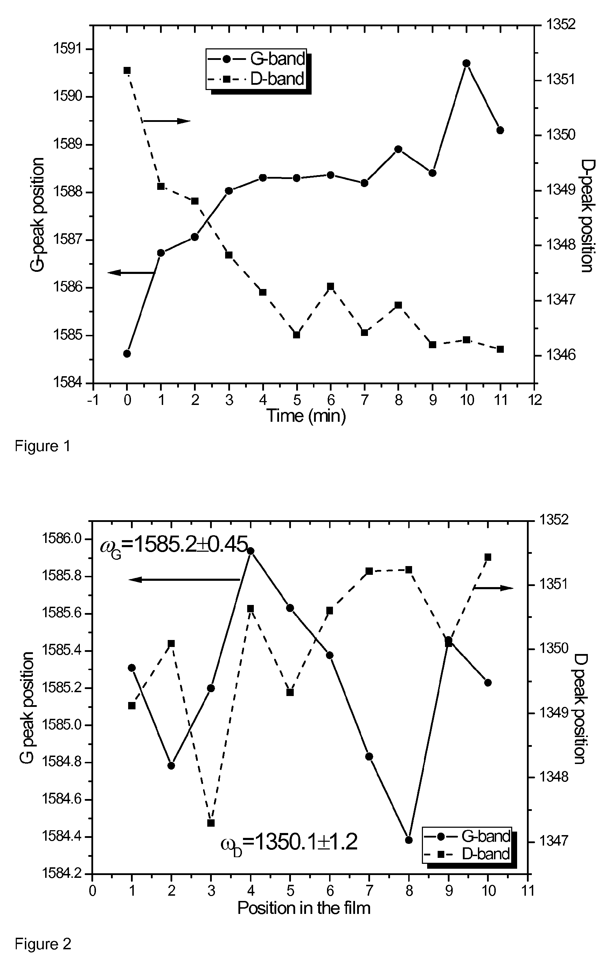

Raman spectra was then collected from the coating using a 514 nm laser at 2.5 mW power at the laser head (Renishaw 1000 system). The positions of the G and D Raman bands were found to be sensitive to the time the laser spent on region of the film being studied (Figure 1). However, it was found that the peak position was repeatable for a given exposure period, such that there was a variation in the position of the bands < 0.5 cm$^{-1}$ across the sample (Figure 2) as measured over a collection time of 50 seconds.

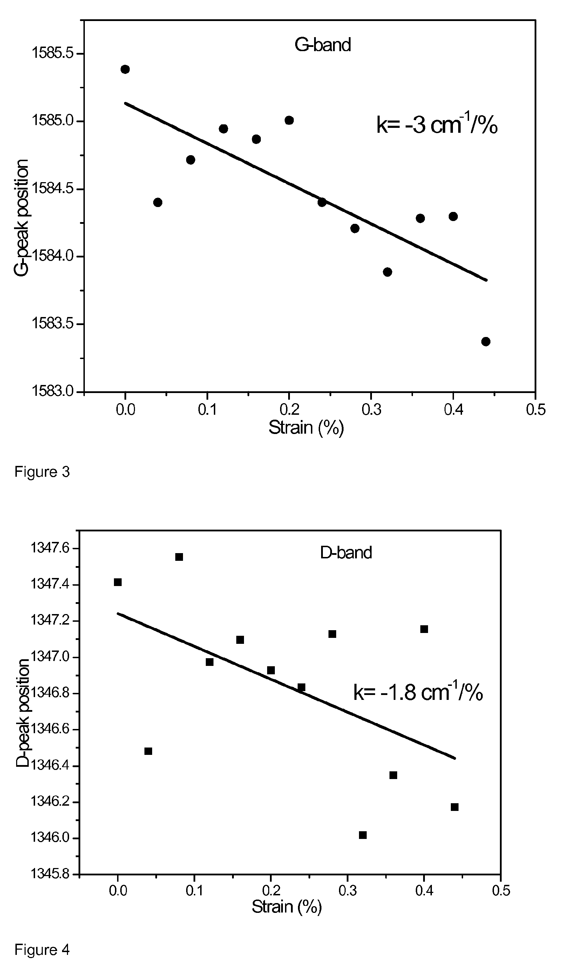

The coated PMMA beam was then deformed with the strain increased stepwise (in increments of 0.04 %). For each strain step, the average band position was taken across 5 locations on the beam (Figures 3 and 4). A peak shift of - 3 cm$^{-1}$ per % was recorded, showing that the GO was a viable strain gauge. (A peak shift of - 3 cm$^{-1}$ per % corresponds to an accuracy of 0.17 % for the $\pm$ 0.5 cm$^{-1}$.)

**Example 2: Strain sensitive coating comprising graphene oxide (GO)-polyvinyl alcohol (PVA) which was deposited onto a steel sample.**

This example also serves to illustrate that graphene oxide (a highly substituted graphene material) can be used as a strain sensitive coating. This example provides an alternative substrate to that used in example 1 and an alternative method of applying the PVA-GO coating to that employed in example 1.

A GO-PVA coating was solution cast onto the steel sample. 0.12 g GO solution (1 mg GO per ml) was mixed with 1.2 g aqueous PVA solution (0.05 wt%) and stirred for 30 minutes. The method for making the GO solution is described in (i) Eda, G.; Fanchini, G.; Chhowalla, M., Large-Area Ultrathin Films of Reduced Graphene Oxide as a Transparent and Flexible Electronic Material. Nat Nano 2008, 3, 270-274; or (ii) Hummers, W. S.; Offeman, R. E., Preparation of Graphitic Oxide. JACS 1958, 80, 1339-1339. The mixture was then dispersed using a sonic bath for another 30 minutes. A drop of the GO-PVA solution was then casted onto 0.4572mm (~0.5mm) thick spring steel beams and left to dry. The concentration of GO in the final PVA/GO composites was 20 wt%. The resulting GO-PVA coating is a homogeneous mixture of GO and PVA. The reference resistive strain gauge was mounted onto the steel next to the coated area.

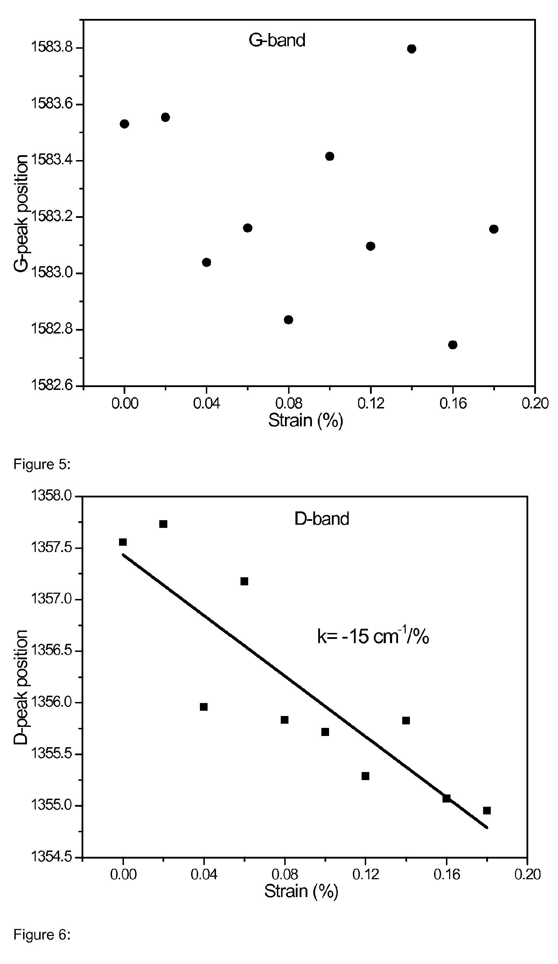

The virtual absence of the G' band from the GO meant that that this band could not be used for strain measurements. Likewise, the shift of the G band with strain was found to be within scatter of the homogeneity of the samples (Figure 5). However, the D peak was found to have a shift rate of -14 cm$^{-1}$ per % strain, up to a maximum strain of ~ 0.18 % at which the interface failed (Figure 6).

**Example 3: The stability of a epoxy-mechanically exfoliated -graphene-PMMA coating on a PMMA beam: Stability and Interface failure**

This example serves to illustrate that pristine, mechanically exfoliated graphene (i.e. an unsubstituted graphene material) can be used as a strain sensitive coating. In this example, an epoxy film is being used as an adhesive layer rather than the PVA adhesive of examples 1 and 2.

A thin epoxy film (300nm) was spin coated onto a PMMA beam (5mm thick). Mechanical exfoliated graphene flakes were then deposited on this epoxy film and a PMMA film (50 nm) coated onto the graphene flakes. A reference resistive strain gauge was then mounted onto the top of the PMMA.

The PMMA beam was deformed stepwise and the peak position was recorded as a function of time at each strain. The Raman G' band position was found to decrease with increasing strain up to a strain of 0.3 %, at which point the interface between the graphene and surrounding polymer failed. It is noted that the interface of the GO-PVA composites of examples 1 and 2 do not fail at this level of strain. Without meaning to be bound by theory, it is thought that the presence of oxygen in GO provides a better interface with the PVA than the interface between the pristine graphene and expoxy as in this example. This shows the that the present invention can be easily tuned to meet any specific needs relating to accuracy and interface strength. At a given strain, the strain readings were found to be constant within 1.36 cm$^{-1}$ up to strains of $\leq$ 0.3 %. It should be noted that 0.3% strain is useful for most mechanical applications of the present invention.

**Example 4: Cyclic loading of a epoxy-mechanical exfoliated -graphene-PMMA coating on a PMMA beam.**

This example serves to illustrate that pristine graphene (i.e. an unsubstituted graphene material) coated onto a PMMA substrate via an epoxy film can be used as a strain gauge. The example also demonstrates the principle of the strain hardening effect.

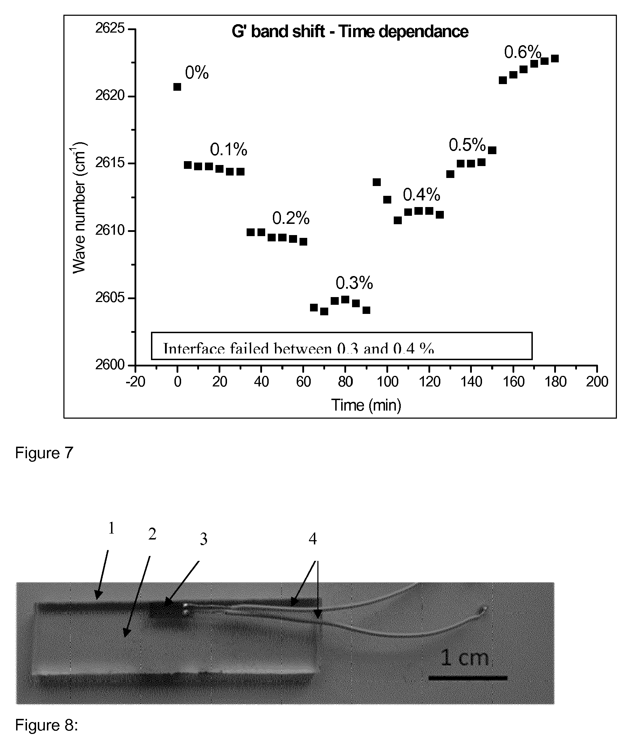

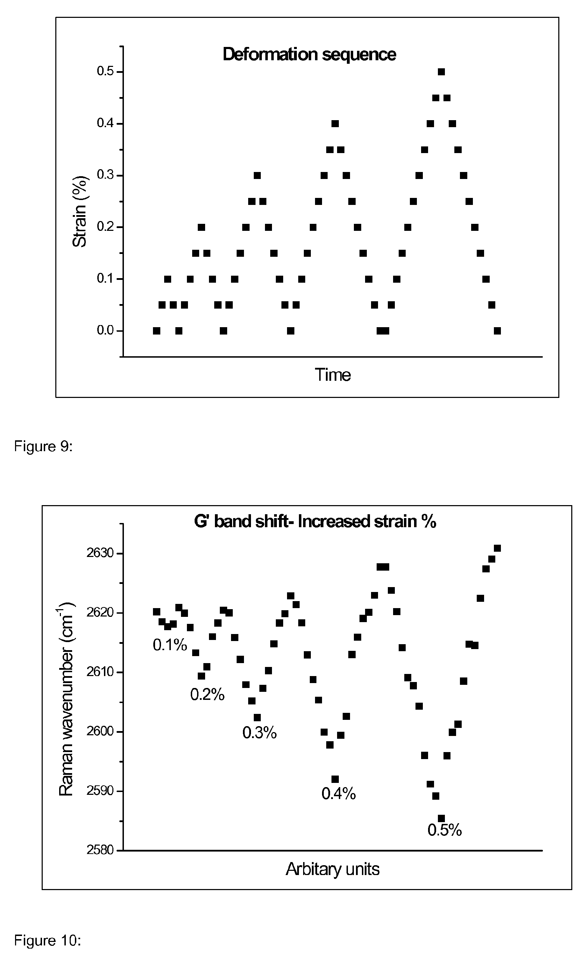

A graphene composite coating was deposited onto a PMMA beam, in the same manner as described in previous examples (example 3 above and example 7 below). A reference strain gauge (denoted as reference numeral 3) was mounted on the film (Figure 8). The remaining reference numerals of figure 8 relate to the substrate (1), mechanical exfoliated graphene (2) and the electrodes (4) that at attached to the strain sensor (3). The strain was increased stepwise, but with an increasing peak strain level in each successive cycle, and then decreased as shown in Figure 9. It can be seen that, as with example 3 above, the interface fails at 0.3% strain. The strain was increased beyond 0.3% to investigate the effects after interface failure. The Raman peak shift with the strain is shown in Figure 10. As can be seen, the peak position of the G' band followed the deformation of the PMMA beam. As table 1, shows, some strain hardening of the composite was observed, with the modulus increasing by a factor 3.

Table 1: Shift rate and effective Young's modulus of graphene subjecting to cyclic deformation with increased strain steps. (Note that -50 cm$^{-1}$/% strain = ~ 1 TPa)

| Maximum Strain (%) | Cycle | Shift Rate (cm$^{-1}$/ %strain) | Effective modulus (TPa) |
|---|---|---|---|
| 0.1% | loading | -25.10 | 0.50 |
| 0.1% | unloading | -32.40 | 0.65 |
| 0.2% | loading | -59.49 | 1.19 |
| 0.2% | unloading | -59.05 | 1.18 |
| 0.3% | loading | -65.63 | 1.31 |
| 0.3% | unloading | -67.59 | 1.35 |
| 0.4% | loading | -79.52 | 1.59 |
| 0.4% | unloading | -84.84 | 1.70 |
| 0.5% | loading | -86.91 | 1.74 |
| 0.5% | unloading | -89.19 | 1.78 |

**Example 5: Straining hardening of graphene composite compared to a single-walled nanotubes (SWNT) composite.**

This example serves to illustrate the advantageous differences between graphene composites compared with SWNT composites.

A graphene composite coating was deposited onto a PMMA beam, as previously described in examples 3 and 4 with a reference strain gauge also mounted on the film (see Figure 8 which illustrates a strain gauge mounted onto a film). A comparable single walled nanotubes composite (SWNT) was produced by mixing 0.1 wt% HiPco ® SWNTs (see http://www.nanointeGris.com/en/hipco) in epoxy and depositing a layer of this mixture on a epoxy beam.

The beams were deformed to a strain just beneath that at which the carbon interface failed (0.3 % for the graphene and 0.8 % for the SWNTs) and then unloaded. This loading cycle was repeated for a total of 4 times. The effective modulus of the SWNTs and graphene in the samples was calculated using a calibration of 1 TPa is equivalent to -50 cm$^{-1}$ per %. Table 2 summarises the results of the experiment.

The first conclusion to note is that the shift rate is approximately 3 times higher for the graphene samples as compared to the SWNT samples. This means that a graphene based strain sensor is 3 times more sensitive than a nanotube based strain sensor. Secondly, the effective modulus of the SWNTs remained approximately constant with each cyclic loading, where as the modulus for the graphene samples increases from 1.07 to 1.35 GPa on loading from the 1st and 4th loading cycles. This shows the benefit of pre-treatment of the graphene composites to increase their modulus.

Table 2: A summary of the SWNT and graphene cyclic deformation up to same strain level (Graphene-0.3% and SWNT-0.8%)

| Cycle | | SWNT (max strain of 0.8%) | | Graphene (max strain of 0.3%) | |
|---|---|---|---|---|---|
| | | Shift rate (cm$^{-1}$/ %strain) | Effective modulus (TPa) | Shift rate (cm$^{-1}$/ %strain) | Effective modulus (TPa) |
| 1 | Loading | -17.48 | 0.35 | -53.68 | 1.07 |
| 1 | Unloading | -16.10 | 0.32 | -47.53 | 0.95 |

(continued)

| Cycle | | SWNT (max strain of 0.8%) | | Graphene (max strain of 0.3%) | |
|---|---|---|---|---|---|
| | | Shift rate (cm$^{-1}$/ %strain) | Effective modulus (TPa) | Shift rate (cm$^{-1}$/ %strain) | Effective modulus (TPa) |
| 2 | Loading | -16.72 | 0.33 | -48.61 | 1.10 |
| | Unloading | -13.94 | 0.28 | -48.81 | 0.98 |
| 3 | Loading | -15.95 | 0.32 | -58.11 | 1.16 |
| | Unloading | -12.43 | 0.25 | -53.80 | 1.08 |
| 4 | Loading | -15.72 | 0.31 | -67.33 | 1.35 |
| | Unloading | -11.69 | 0.23 | -48.21 | 0.96 |

**Example 6: Graphene vs graphene sandwich**

This example serves to illustrate that a sandwiched graphene composite works as well as a non-sandwiched graphene composite as a strain sensor given sufficiently large graphene flakes and good interface between the graphene and the underlying polymer. This is important as a sandwiched graphene composite will be harder wearing than a non-sandwiched graphene composite and therefore the real-life utility of a strain sensor comprising graphene is improved.

The specimen was prepared following the general procedure of examples 3 and 4 above and employed a 5 mm thick poly(methyl methacrylate) beam spin-coated with 300 nm of SU-8 epoxy resin. The graphene was produced by mechanical cleaving of graphite and deposited on the surface of the SU-8. This method produced graphene with a range of different numbers of layers and the monolayers were identified both optically and by using Raman spectroscopy. The PMMA beam was deformed in 4-point bending up to 0.4% strain with the strain monitored using a strain gage attached to the beam surface. Well-defined Raman spectra could be obtained from the graphene monolayer using a low-power HeNe laser (1.96 eV and < 1 mW at the sample in a Renishaw 2000 spectrometer) and the deformation of the graphene in the composite was followed from the shift of the 2D (or G') band. The laser beam polarization was always parallel to the tensile axis and the spot size of the laser beam on the sample was approximately 2 $\mu$m using a 50$\times$ objective lens.

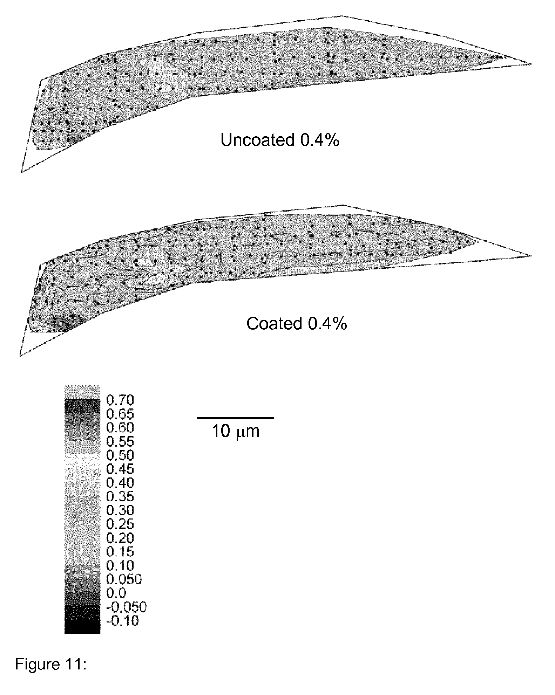

Raman spectra were obtained at different strain levels through mapping over the graphene monolayer in steps of between 2 $\mu$m and 5 $\mu$m by moving the x-y stage of the microscope manually and checking the position of the laser spot on the specimen relative to the image of the monolayer on the screen of the microscope. The strain at each measurement point was determined from the position of the 2D Raman band using the calibration in Figure 2 and strain maps of the monolayer were produced in the form of colored x-y contour maps using the OriginPro 8.1 graph-plotting software package, which interpolates the strain between the measurement points (see figure 11).

The beam was then unloaded and another thin 300 nm layer of SU-8 epoxy resin was then spin-coated on top so that the graphene remained visible when sandwiched between the two coated polymer layers. The beam was then reloaded initially up to 0.4% strain, unloaded and then reloaded to various other levels of strain. The strain in the graphene monolayer was mapped fully at each strain level as well as in the unloaded state (see figure 11).

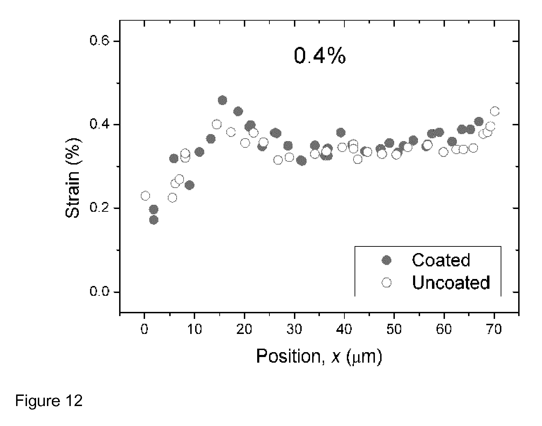

As can be seen from comparing the coated and uncoated contour maps of figure 11 and the strain plots of figure 12, the presence of a coating on the top of the graphene has no deleterious effect on the sensitivity of the material.

**Example 7**

A graphene polymer composite was prepared using a 5 mm thick poly(methyl methacrylate) beam spin-coated with 300 nm of SU-8 epoxy resin. The graphene, produced by the mechanical cleaving of graphite, was deposited on the surface of the SU-8. This method produced graphene with a range of different numbers of layers and the monolayers were identified both optically [26] and using Raman spectroscopy. A thin 50 nm layer of PMMA was then spin-coated on top of the beam so that the graphene remained visible when sandwiched between the two coated polymer layers as shown in Figure 13a. Figure 13b illustrates a schematic diagram (not to scale) of a section through the composite.

The PMMA beam was deformed in 4-point bending and the strain monitored using a strain gauge attached to the beam surface. A well-defined Raman spectrum could be obtained through the PMMA coating using a low-power HeNe laser (1.96 eV and < 1 mW at the sample in a Renishaw 2000 spectrometer) and the deformation of the graphene in the composite was followed from the shift of the G' band [22-25] (see figures 14a and 14b). The laser beam polarization was always parallel to the tensile axis.

**Example 8 - Characterisation of the Graphene using Raman Spectroscopy[S1]**

Raman spectroscopy has been employed to follow the deformation of the graphene in the polymer composite. Fig. 17 shows that the technique can also be used to differentiate between flakes of graphene with different numbers of layers.

**Example 9 - Shear Lag Analysis for a Graphene Single Monolayer[S2,S3]**

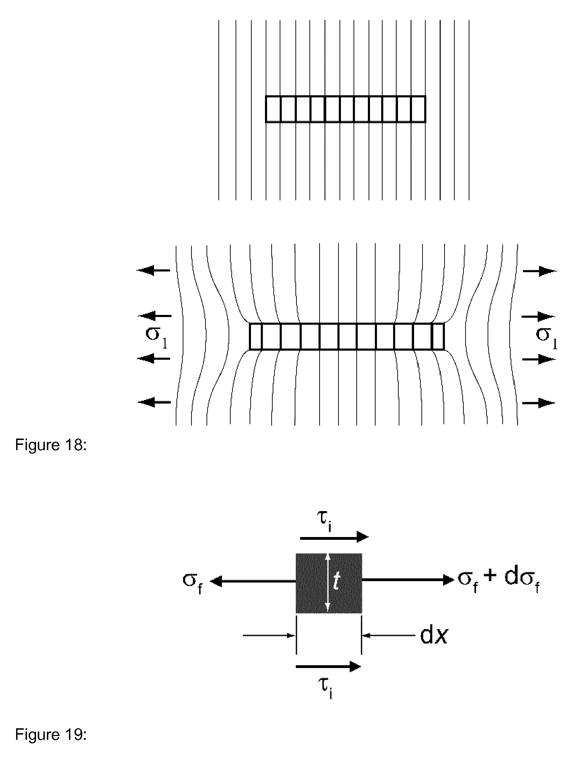

In the case of discontinuous graphene flakes reinforcing a composite matrix, stress transfer from the matrix to the flake is assumed to take place through a shear stress at the flake/matrix interface as shown in Fig. 18. Before deformation parallel lines perpendicular to the flake can be drawn before deformation from the matrix through the flake. When the system is subjected to axial stress, $\sigma_1$, parallel to the flake axis, the lines become distorted since the Young's modulus of the matrix is much less than that of the flake. This induces a shear stress at the flake/matrix interface. The axial stress in the flake will build up from zero at the flake ends to a maximum value in the middle of the flake. The uniform strain assumption means that, if the flake is long enough, in the middle of the flake the strain in the flake equals that in the matrix. Since the flakes have a much higher Young's modulus it means that the flakes carry most of the stress in the composite.

The relationship between the interfacial shear stress, $\tau_i$, near the flake ends and the flake stress, $\sigma_f$, can be determined by using a force balance of the shear forces at the interface and the tensile forces in a flake element as shown in Fig. 19.

The main assumption is that the forces due to the shear stress at the interface, $\tau_i$, is balanced by the force due to the variation of axial stress in the flake, $d\sigma_f$, such that if the element shown in Fig. 19 is of unit width

$$\tau_i \mathrm{d}x = -t\mathrm{d}\sigma_f \tag{SI.1}$$

and so

$$\frac{\mathrm{d}\sigma_f}{\mathrm{d}x} = -\frac{\tau_i}{t} \tag{SI.2}$$

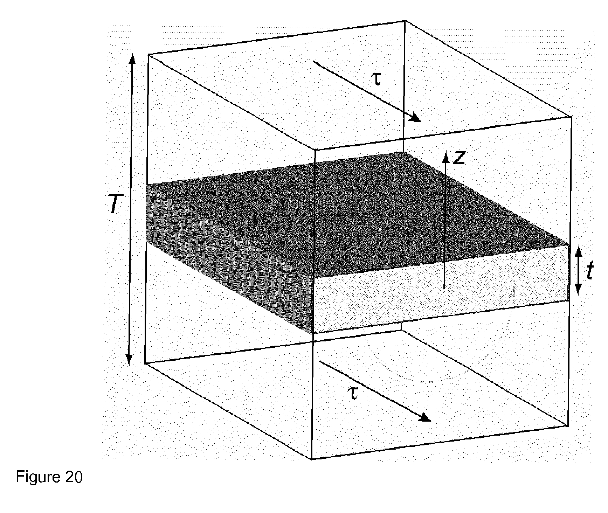

The behaviour of a discontinuous flake in a matrix can be modelled using shear lag theory in which it is assumed that the flake is surrounded by a layer of resin at a distance, z, from the flake centre as show in Fig. 20. The resin has an overall thickness of T. It is assumed that both the flake and matrix deform elastically and the flake-matrix interface remains intact. If u is the displacement of the matrix in the flake axial direction at a distance, z, then the shear strain, $\gamma$, at that position is be given by

$$\gamma = \frac{\mathrm{d}u}{\mathrm{d}z} \tag{SI.3}$$

The shear modulus of the matrix is defined as $G_m = \tau/\gamma$ hence

$$\frac{\mathrm{d}u}{\mathrm{d}z} = \frac{\tau}{G_m} \tag{SI.4}$$

The shear force per unit length carried by the matrix is transmitted to the flake surface though the layers of resin and so the shear strain at any distance z is given by

$$\frac{\mathrm{d}u}{\mathrm{d}z} = \frac{\tau_i}{G_m} \tag{SI.5}$$

This equation can be integrated using the limits of the displacement at the flake surface ($z = t/2$) of $u = u_f$ and the displacement at $z = T/2$ of $u = u_T$

$$\int_{u_f}^{u_T} \mathrm{d}u = \left(\frac{\tau_i}{G_m}\right)\int_{t/2}^{T/2}\mathrm{d}z \qquad (SI.6)$$

hence

$$u_T - u_f = \left(\frac{\tau_i}{2G_m}\right)(T-t) \qquad (SI.7)$$

It is possible to convert these displacements into strain since the flake strain, $e_f$ and matrix strain, $e_m$, can be approximated as $e_f \approx \mathrm{d}u_f/\mathrm{d}x$ and $e_m \approx \mathrm{d}u_T/\mathrm{d}x$. It should be noted that this shear-lag analysis is not rigorous but it serves as a simple illustration of the process of stress transfer from the matrix to a flake in a graphene-flake composite. In addition, $\tau_i$ is given by Equation (SI.2) and so differentiating Equation (SI.7) with respect to x leads to

$$e_f - e_m = \frac{tT}{2G_m}\left(\frac{\mathrm{d}^2\sigma_f}{\mathrm{d}x^2}\right) \qquad (SI.8)$$

since $T >> t$. Multiplying through by $E_f$ gives

$$\frac{\mathrm{d}^2\sigma_f}{\mathrm{d}x^2} = \frac{n^2}{t^2}\left(\sigma_f - e_m E_f\right)$$

where

$$n = \sqrt{\frac{2G_m}{E_f}\left(\frac{t}{T}\right)} \qquad (SI.9)$$

This differential equation has the general solution

$$\sigma_f = E_f e_m + C\sinh\left(\frac{nx}{t}\right) + D\cosh\left(\frac{nx}{t}\right)$$

where C and D are constants of integration. This equation can be simplified and solved if it is assumed that the boundary conditions are that there is no stress transmitted across the flake ends, i.e. if $x = 0$ in the middle of the flake where $\sigma_f = E_f e_m$ then $\sigma_f = 0$ at $x = \pm l/2$. This leads to C = 0 and

$$D = -\frac{E_f e_m}{\cosh(nl/2t)}$$

The final equation for the distribution of flake stress as a function of distance, x along the flake is then

$$\sigma_f = E_f e_m\left[1 - \frac{\cosh(nx/t)}{\cosh(nl/2t)}\right]$$

$$(SI.10)$$

Finally it is possible to determine the distribution of interfacial shear stress along the flake using Equation (SI.2) which leads to

$$\tau_{i} = nE_{f}e_{m}\frac{\sinh(nx/t)}{\cosh(nl/2t)}$$

It is convenient at this stage to introduce the concept of flake aspect ratio, s = $l/t$ so that the two equations above can be rewritten as

$$\sigma_{f} = E_{f}e_{m}\left[1 - \frac{\cosh\left(ns\frac{x}{l}\right)}{\cosh(ns/2)}\right] \qquad (SI.12)$$

for the axial flake stress and as

$$\tau_{i} = nE_{f}e_{m}\frac{\sinh\left(ns\frac{x}{l}\right)}{\cosh(ns/2)}$$

for the interfacial shear stress.

It can be seen that the flake is most highly stressed, i.e. the most efficient flake reinforcement is obtained, when the product ns is high. This implies that a high aspect ratio, s, is desirable along with a high value of $n$.

**Example 10 - Fit of Experimental Data of the Graphene Monolayer to the Shear Lag Analysis**

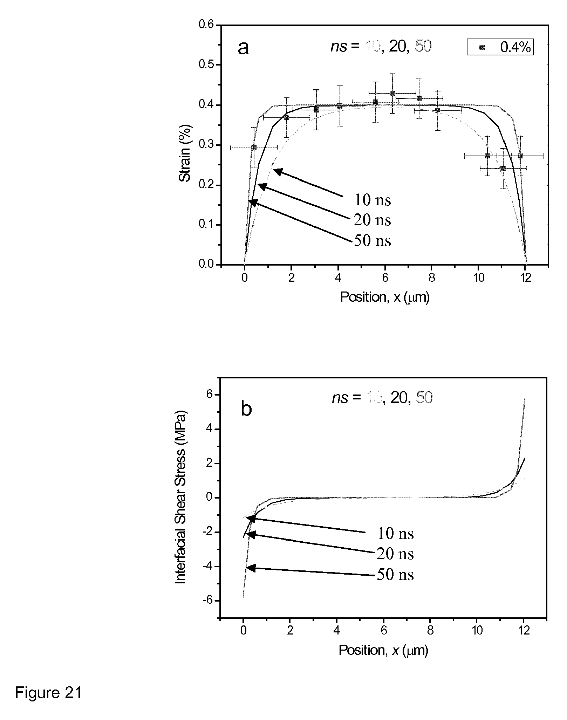

The experimental data on the variation of graphene strain across the monolayer flake are fitted to the shear lag analysis derived above in Fig. 21. It can be seen that the fits of the theoretical shear-lag curves to the strain distribution are sensitive to the value of ns chosen. Likewise the value of interfacial shear stress at the flake ends is very sensitive to the values of ns chosen.

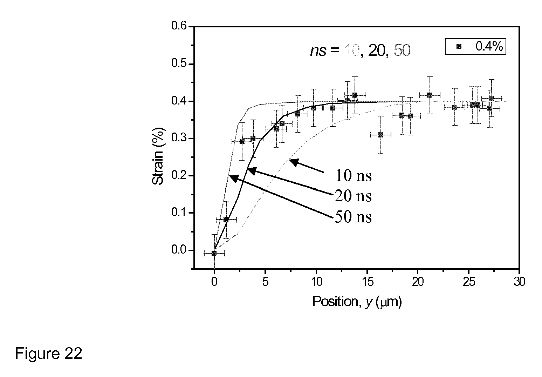

Figure 22 shows the fits of Equ. SI.12 to the vertical strain distribution across the graphene monolayer flake as it tapers to a point at y = 0. It can be seen that the fits are very sensitive to the value of ns employed.

**Example 11: SU-8/Mechanical cleaved graphene/SU-8/Steel**

SU-8 epoxy was spin coated onto a steel substrate. Mechanically cleaved graphene was deposited on the SU-8 and a thin layer of SU-8 epoxy was laid on top of it. A bilayer of graphene was indentified and the shift of the G' plotted as a function of strain as measured from a reference resistive gauge was recorded. The effective modulus of the graphene during loading was 0.28TPa and unloading was 0.35TPa.

**Example 12: SU-8/Mechanically cleaved graphene/Steel**

Mechanically cleaved graphene was deposited onto a steel substrate and SU-8 was spin coated on it. It was found that the mechanically cleaved graphene did not adhere well to the steel, without the epoxy adhesion layer. A graphene multilayer flake was indentified and the spectra collected as a function of strain, as measured by a reference resistive strain gauge. The poor adhesion between the graphene and the steel meant that the rate of the peak shift for the graphene was very low compared to when an adhesion layer is used.

**References**

[1] K. S. Novoselov, A. K. Geim, S. V. Morozov, D. Jiang, Y. Zhang, S. V. Dubonos I. V. Grigorieva, A. A. Firsov, Science, 2004, 306, 666

[2] A. K. Geim, K. S. Novoselov, Nature Materials, 2007, 6, 183

[3] K. S. Novoselov, A. K. Geim, S. V. Morozov, D. Jiang, M. I. Katsnelson, I. V. Grigorieva, S. V. Dubonos, A. A. Firsov, Nature, 2005, 438, 197

[4] Y. B. Zhang, Y. W. Tan, H. L. Stormer, P. Kim, Nature, 2005, 438, 201

[5] C. Lee, X. D. Wei, J. W. Kysar, J. Hone, Science, 2008, 321, 385

[6] E. T. Thostenson, Z. F. Ren, T. W. Chou Composites Science And Technology, 2001, 61, 1899

[7] R. H. Baughman, A. A. Zakhidov, W. A. de Heer, Science, 2002, 297, 787

[8] P. C. LeBaron, Z. Wang, T. J. Pinnavaia, Applied Clay Science, 1999, 15, 11

[9] Y. Kojima, A. Usuki, M. Kawasumi, A. Okada, Y. Fukushima, T. Kurauchi, O. Kamigaito, Journal of Materials Research, 1993, 8, 1185

[10] S. Stankovich, D. A. Dikin, G. H. B. Dommett, K. M. Kohlhaas, E. J. Zimney, E. A. Stach, R. D. Piner, S. T. Nguyen, R. S. Ruoff, Nature, 2006, 442, 282

[11] T. Ramanathan, A. A. Abdala, S. Stankovich, D. A. Dikin, M. Herrera-Alonso, R. D. Piner, D. H. Adamson, H. C. Schniepp, X. Chen, R. S. Ruoff, S. T. Nguyen, I. A. Aksay, R. K. Prud'homme, L. C. Brinson, Nature Nanotechnology, 2008, 3, 327

[12] Y. L. Huang, R.J. Young, Composites Science and Technology, 1994, 52, 505

[13] P. W. J. van den Heuvel, T. Peijs, R. J. Young, Composites Science and Technology, 1997, 57, 899

[14] C. A. Cooper, R. J. Young, M. Halsall, Composites PartA-Applied Science and Manufacturing, 2001, 32, 401

[15] M. Lucas, R. J. Young, Physical Review B, 2004, 69, 085405

[16] S. Cui, I. A. Kinloch, R. J. Young, L. Noé, M. Monthioux, Advanced Materials, 2009, 21, 3591

[17] Jorio, A. R. Saito, J. H. Hafner, C. M. Lieber, M. Hunter, T. McClure, G. Dresselhaus, M. S. Dresselhaus, Physical Review Letters, 2001, 86, 1118

[18] P. Kannan, S. J. Eichhorn, R. J. Young, Nanotechnology, 2007, 18, 235707

[19] P. Kannan, R. J. Young, S. J. Eichhorn, Small, 2008, 7, 930

[20] A. C. Ferrari, J. C. Meyer, V. Scardaci, C. Casiraghi, M. Lazzeri, F. Mauri, S. Piscanec, D. Jiang, K. S. Novoselov, S. Roth, A. K. Geim, Physical Review Letters, 2006, 97, 187401

[22] M. Y. Huang, H. Yan, C. Y. Chen, D. H. Song, T. F. Heinz, J. Hone, Proceedings of the National Academy of Sciences, 2009, 106, 7304

[23] T. M. G. Mohiuddin, A. Lombardo, R. R. Nair, A. Bonetti, G. Savini, R. Jalil, N. Bonini, D. M. Basko, C. Galiotis, N. Marzari, K. S. Novoselov, A. K. Geim, A. C. Ferrari, Physical Review B, 2009, 79, 205433

[24] G. Tsoukleri, J. Parthenios, K. Papagelis, R. Jalil, A. C. Ferrari, A. K. Geim, K. S. Novoselov, C. Galiotis, Small, 2009, 5, 2397

[25] J. E. Proctor, E. Gregoryanz, K. S. Novoselov, M. Lotya, J. N. Coleman, M. P. Halsall, Physical Review B, 2009, 80, 073408

[26] P. Blake, E. W. Hill, A. H. C. Neto, K. S. Novoselov, D. Jiang, R. Yang, T. J. Booth, A. K. Geim, Applied Physics Letters, 2007, 91, 063124

[27] H. L. Cox, British Journal ofApplied Physics, 1952, 3, 72

[28] J. A. Nairn, Mechanics of Materials, 1992, 13, 131

[29] A. Kelly, N. H. Macmillan, Strong Solids, 3rd Edition, Clarendon Press, Oxford, 1986

[30] P. Blake, P. D. Brimicombe, R. R. Nair, T. J. Booth, D. Jiang, F. Schedin, L. A. Ponomarenko, S. V. Morozov, H. F. Gleeson, E. W. Hill, A. K. Geim, K. S. Novoselov, Nano Letters, 2008, 8, 1704-1708

[31] Y. Hernandez, V. Nicolosi, M. Lotya, F. M. Blighe, Z. Y. Sun, S. De, I. T. McGovern, B. Holland, M. Byrne, Y. K. Gun'ko, J. J. Boland, P. Niraj, G. Duesberg, S. Krishnamurthy, R. Goodhue, J. Hutchison, V. Scardaci, A. C. Ferrari, J. N. Coleman, Nature Nanotechnology, 2008, 3, 563


1. Ferrari A. C. et al., Raman spectrum of graphene and graphene layers, Physical Review Letters, 97, 187401 (2006)

2. Kelly, A. & Macmillan, N.H., Strong Solids, 3rd Edition, Clarendon Press, Oxford, 1986.

3. Young, R.J. & Lovell, P.A., Introduction to Polymers, 3rd Edition, Chapter 24, CRC Press, London, in press

## Claims

1. A structural material comprising a nanocomposite material, the nanocomposite material comprising:

    a substrate; and
    a graphene component distributed in the substrate;

wherein the graphene component is graphene or functionalised graphene and is in the form of flakes at least 10 $\mu$m in length.

2. A structural material as claimed in claim 1, wherein the nanocomposite material comprises an adhesive component.

3. A structural material as claimed in claim 1 or claim 2, wherein the substrate is a polymer selected from the group comprising: polyolefins, such as polyethylenes and polypropylenes, polyacrylates, polymethacrylates, polyacrylonitriles, polyamides, polyvinylacetates, polyethyleneoxides, polyethylene, terphthalates, polyesters, polyurethanes and polyvinylchlorides.

4. A structural material as claimed in any preceding claim, wherein the graphene component is functionalised graphene.

5. A structural material as claimed in claim 4, wherein the graphene component is graphene oxide.

6. A structural material as claimed in claim 4, wherein the graphene component is fluorographene.

7. A structural material as claimed in any one of claims 1 to 3, wherein the graphene component is pristine graphene.

8. A structural material as claimed in any preceding claim, wherein the substrate thickness may be from 1 $\mu$m to 10 mm.

9. A structural material as claimed in any preceding claim wherein the structural material is the nanocomposite material.

10. Use of a graphene component as described in any one of claims 1 and 4 to 7, for the production of a structural material.

**Patentansprüche**

1. Strukturmaterial umfassend ein Nanoverbundmaterial, das Nanoverbundmaterial umfassend:

    ein Substrat; und
    eine Graphenkomponente, die in dem Substrat verteilt ist;

    wobei die Graphenkomponente Graphen oder funktionalisiertes Graphen ist und in der Form von Flocken mit einer Länge von zumindest 10 $\mu$m vorliegt.

2. Strukturmaterial nach Anspruch 1, wobei das Nanoverbundmaterial eine Haftkomponente umfasst.

3. Strukturmaterial nach Anspruch 1 oder Anspruch 2, wobei das Substrat ein Polymer ist, ausgewählt aus der Gruppe umfassend: Polyolefine wie beispielsweise Polyethylene und Polypropylene, Polyacrylate, Polymethacrylate, Polyacrylonitrile, Polyamide, Polyvinylacetate, Polyethyleneoxide, Polyethylen, Terphthalate, Polyester, Polyurethane und Polyvinylchloride.

4. Strukturmaterial nach einem der vorhergehenden Ansprüche, wobei die Graphenkomponente funktionalisiertes Graphen ist.

5. Strukturmaterial nach einem Anspruch 4, wobei die Graphenkomponente Graphenoxid ist.

6. Strukturmaterial nach einem Anspruch 4, wobei die Graphenkomponente Fluorgraphen ist.

7. Strukturmaterial nach einem der Ansprüche 1 bis 3, wobei die Graphenkomponente reines Graphen ist.

8. Strukturmaterial nach einem der vorhergehenden Ansprüche, wobei die Substratdicke von 1 $\mu$m bis 10 mm betragen kann.

9. Strukturmaterial nach einem der vorhergehenden Ansprüche, wobei das Strukturmaterial das Nanoverbundmaterial ist.

10. Verwendung einer Graphenkomponente, so wie in einem der Ansprüche 1 und 4 bis 7 beschrieben, für die Produktion eines Strukturmaterials.

**Revendications**

1. Matériau structural comprenant un matériau nanocomposite, le matériau nanocomposite comprenant :

    un substrat ; et
    un constituant de graphène réparti dans le substrat ;

    dans lequel le constituant de graphène est un graphène ou un graphène fonctionnalisé et se présente sous la forme de flocons ayant une longueur supérieure ou égale à 10 $\mu$m.

2. Matériau structural selon la revendication 1, dans lequel le matériau nanocomposite comprend un constituant adhésif.

3. Matériau structural selon la revendication 1 ou la revendication 2, dans lequel le substrat est un polymère choisi dans le groupe comprenant : des polyoléfines, telles que des polyéthylènes et des polypropylènes, des polyacrylates, des polyméthacrylates, des polyacrylonitriles, des polyamides, des polyvinyleacétates, des oxydes de polyéthylène, du polyéthylène, des téréphtalates, des polyesters, des polyuréthanes et des polychlorures de vinyle.

4. Matériau structural selon l'une quelconque des revendications précédentes, dans lequel le constituant de graphène est un graphène fonctionnalisé.

5. Matériau structural selon la revendication 4, dans lequel le constituant de graphène est un oxyde de graphène.

6. Matériau structural selon la revendication 4, dans lequel le constituant de graphène est un fluorographène.

7. Matériau structural selon l'une quelconque des revendications 1 à 3, dans lequel le constituant de graphène est un graphène vierge.

8. Matériau structural selon l'une quelconque des revendications précédentes, dans lequel l'épaisseur de substrat peut aller de 1 $\mu$m à 10 mm.

9. Matériau structural selon l'une quelconque des revendications précédentes, dans lequel le matériau structural est le matériau nanocomposite.

10. Utilisation d'un constituant de graphène selon l'une quelconque des revendications 1 et 4 à 7 pour la production d'un matériau structural.

Figure 1

Figure 2

Figure 3

Figure 4

Figure 5:

Figure 6:

Figure 7

Figure 8:

Figure 9:

Figure 10:

Uncoated 0.4%

Coated 0.4%

0.70
0.65
0.60
0.55
0.50
0.45
0.40
0.35
0.30
0.25
0.20
0.15
0.10
0.050
0.0
-0.050
-0.10

10 μm

Figure 11:

Figure 12

a)

Monolayer

10 µm

b)

SU-8          Graphene monolayer          PMMA

PMMA

Figure 13

**a)**

**b)**

Figure 14

a)

b)

Figure 15:

Figure 16:

Figure 17:

bar

**EP 2 851 342 B1**

Figure 18:

Figure 19:

Figure 20

Figure 21

Figure 22

Figure 23a

Figure 23b

Figure 24a

Figure 24b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIN ZHAO et al.** *Macromolecules,* 2010, vol. 43, 9411-9416
- **EDA, G. ; FANCHINI, G. ; CHHOWALLA, M.** Large-Area Ultrathin Films of Reduced Graphene Oxide as a Transparent and Flexible Electronic Material. *Nat Nano,* 2008, vol. 3, 270-274
- **HUMMERS, W. S. ; OFFEMAN, R. E.** Preparation of Graphitic Oxide. *JACS,* 1958, vol. 80
- **HUMMERS, W. S. ; OFFEMAN, R. E.** Preparation of Graphitic Oxide. *JACS,* 1958, vol. 80, 1339-1339
- **K. S. NOVOSELOV ; A. K. GEIM ; S. V. MOROZOV ; D. JIANG ; Y. ZHANG ; S. V. DUBONOS ; I. V. GRIGORIEVA ; A. A. FIRSOV.** *Science,* 2004, vol. 306, 666
- **A. K. GEIM ; K. S. NOVOSELOV.** *Nature Materials,* 2007, vol. 6, 183
- **K. S. NOVOSELOV ; A. K. GEIM ; S. V. MOROZOV ; D. JIANG ; M. I. KATSNELSON ; I. V. GRIGORIEVA ; S. V. DUBONOS ; A. A. FIRSOV.** *Nature,* 2005, vol. 438, 197
- **Y. B. ZHANG ; Y. W. TAN ; H. L. STORMER ; P. KIM.** *Nature,* 2005, vol. 438, 201
- **C. LEE ; X. D. WEI ; J. W. KYSAR ; J. HONE.** *Science,* 2008, vol. 321, 385
- **E. T. THOSTENSON ; Z. F. REN ; T. W. CHOU.** *Composites Science And Technology,* 2001, vol. 61, 1899
- **R. H. BAUGHMAN ; A. A. ZAKHIDOV ; W. A. DE HEER.** *Science,* 2002, vol. 297, 787
- **P. C. LEBARON ; Z. WANG ; T. J. PINNAVAIA.** *Applied Clay Science,* 1999, vol. 15, 11
- **Y. KOJIMA ; A. USUKI ; M. KAWASUMI ; A. OKADA ; Y. FUKUSHIMA ; T. KURAUCHI ; O. KAMIGAITO.** *Journal of Materials Research,* 1993, vol. 8, 1185
- **S. STANKOVICH ; D. A. DIKIN ; G. H. B. DOMMETT ; K. M. KOHLHAAS ; E. J. ZIMNEY ; E. A. STACH ; R. D. PINER ; S. T. NGUYEN ; R. S. RUOFF.** *Nature,* 2006, vol. 442, 282
- **T. RAMANATHAN ; A. A. ABDALA ; S. STANKOVICH ; D. A. DIKIN ; M. HERRERA-ALONSO ; R. D. PINER ; D. H. ADAMSON ; H. C. SCHNIEPP ; X. CHEN ; R. S. RUOFF.** *Nature Nanotechnology,* 2008, vol. 3, 327
- **Y. L. HUANG ; R.J. YOUNG.** *Composites Science and Technology,* 1994, vol. 52, 505
- **P. W. J. VAN DEN HEUVEL ; T. PEIJS ; R. J. YOUNG.** *Composites Science and Technology,* 1997, vol. 57, 899
- **C. A. COOPER ; R. J. YOUNG ; M. HALSALL.** *Composites PartA-Applied Science and Manufacturing,* 2001, vol. 32, 401
- **M. LUCAS ; R. J. YOUNG.** *Physical Review B,* 2004, vol. 69, 085405
- **S. CUI ; I. A. KINLOCH ; R. J. YOUNG ; L. NOÉ ; M. MONTHIOUX.** *Advanced Materials,* 2009, vol. 21, 3591
- **JORIO, A. R. SAITO ; J. H. HAFNER ; C. M. LIEBER ; M. HUNTER ; T. MCCLURE ; G. DRESSELHAUS ; M. S. DRESSELHAUS.** *Physical Review Letters,* 2001, vol. 86, 1118
- **P. KANNAN ; S. J. EICHHORN ; R. J. YOUNG.** *Nanotechnology,* 2007, vol. 18, 235707
- **P. KANNAN ; R. J. YOUNG ; S. J. EICHHORN.** *Small,* 2008, vol. 7, 930
- **A. C. FERRARI ; J. C. MEYER ; V. SCARDACI ; C. CASIRAGHI ; M. LAZZERI ; F. MAURI ; S. PISCANEC ; D. JIANG ; K. S. NOVOSELOV ; S. ROTH.** *Physical Review Letters,* 2006, vol. 97, 187401
- **M. Y. HUANG ; H. YAN ; C. Y. CHEN ; D. H. SONG ; T. F. HEINZ ; J. HONE.** *Proceedings of the National Academy of Sciences,* 2009, vol. 106, 7304
- **T. M. G. MOHIUDDIN ; A. LOMBARDO ; R. R. NAIR ; A. BONETTI ; G. SAVINI ; R. JALIL ; N. BONINI ; D. M. BASKO ; C. GALIOTIS ; N. MARZARI.** *Physical Review B,* 2009, vol. 79, 205433
- **G. TSOUKLERI ; J. PARTHENIOS ; K. PAPAGELIS ; R. JALIL ; A. C. FERRARI ; A. K. GEIM ; K. S. NOVOSELOV ; C. GALIOTIS.** *Small,* 2009, vol. 5, 2397
- **J. E. PROCTOR ; E. GREGORYANZ ; K. S. NOVOSELOV ; M. LOTYA ; J. N. COLEMAN ; M. P. HALSALL.** *Physical Review B,* 2009, vol. 80, 073408
- **P. BLAKE ; E. W. HILL ; A. H. C. NETO ; K. S. NOVOSELOV ; D. JIANG ; R. YANG ; T. J. BOOTH ; A. K. GEIM.** *Applied Physics Letters,* 2007, vol. 91, 063124
- **H. L. COX.** *British Journal ofApplied Physics,* 1952, vol. 3, 72
- **J. A. NAIRN.** *Mechanics of Materials,* 1992, vol. 13, 131

- **A. KELLY ; N. H. MACMILLAN.** Strong Solids. Clarendon Press, 1986
- **P. BLAKE ; P. D. BRIMICOMBE ; R. R. NAIR ; T. J. BOOTH ; D. JIANG ; F. SCHEDIN ; L. A. PONOMARENKO ; S. V. MOROZOV ; H. F. GLEESON ; E. W. HILL.** *Nano Letters,* 2008, vol. 8, 1704-1708
- **Y. HERNANDEZ ; V. NICOLOSI ; M. LOTYA ; F. M. BLIGHE ; Z. Y. SUN ; S. DE ; I. T. MCGOVERN ; B. HOLLAND ; M. BYRNE ; Y. K. GUN'KO.** *Nature Nanotechnology,* 2008, vol. 3, 563
- **FERRARI A. C. et al.** Raman spectrum of graphene and graphene layers. *Physical Review Letters,* 2006, vol. 97, 187401
- **KELLY, A ; MACMILLAN, N.H.** Strong Solids. Clarendon Press, 1986
- **YOUNG, R.J. ; LOVELL, P.A.** Introduction to Polymers. CRC Press